# FASCICULE DE BREVET EUROPEEN

(11) **EP 3 282 204 B1**
(45) Date de publication et mention de la délivrance du brevet: **13.05.2020**
(21) Numéro de dépôt: 17182522.7
(22) Date de dépôt: 21.07.2017
(51) Int. Cl.: F24F 13/02, F16L 37/22, F16L 37/23, F16L 37/12

(54) **SYSTÈME DE RACCORDEMENT DE CONNECTEURS DE DEUX UNITÉS DE CLIMATISATION À POSITION DE VERROUILLAGE IRRÉVERSIBLE**
VERBINDUNGSSYSTEM VON ANSCHLUSSSTÜCKEN VON ZWEI KLIMATISIERUNGSEINHEITEN MIT IRREVERSIBLER VERRIEGELUNGSPOSITION
SYSTEM FOR CONNECTING CONNECTORS OF TWO AIR-CONDITIONING UNITS IN AN IRREVERSIBLE LOCKING POSITION

(30) Priorité: 25.07.2016 FR 1657097
(43) Date de publication de la demande: 14.02.2018
(73) Titulaire: Star Light, 06000 Nice (FR)
(72) Inventeur: DESCATOIRE, Julien, 35260 Cancale (FR)
(74) Mandataire: Decobert, Jean-Pascal

(56) Documents cités:
- WO-A1-2010/136800
- WO-A2-2014/039867
- US-A1- 2008 017 269
- US-B1- 6 193 285

## Description

### DOMAINE TECHNIQUE DE L'INVENTION

La présente un système de raccordement de connecteurs de deux unités de climatisation à position de verrouillage irréversible. Par irréversible, il est entendu indémontable sans endommagement de pièces du système de raccordement ou un démontage rendu très difficile et devant s'effectuer par un professionnel.

### ÉTAT DE LA TECHNIQUE

Lors de l'installation d'une climatisation, il y a généralement deux unités, à savoir unité intérieure et unité extérieure. Des réglementations en vigueur dans différents pays imposent le recours à un professionnel pour installer cette climatisation. En effet, il existe toujours un risque de rejet dans l'atmosphère de gaz réfrigérants très polluants lors de l'installation d'une telle climatisation. Il en va de même lors du démontage d'une telle installation. WO2014/039867 divulgue un système de raccordement selon le préambule de la revendication 1.

Il existe néanmoins des systèmes de raccordement de connecteurs de deux unités de climatisation dont l'utilisation est accessible à des non-professionnels. De tels systèmes de raccordement doivent cependant être indémontables, tout au moins par un non professionnel non équipé d'outils spécifiques.

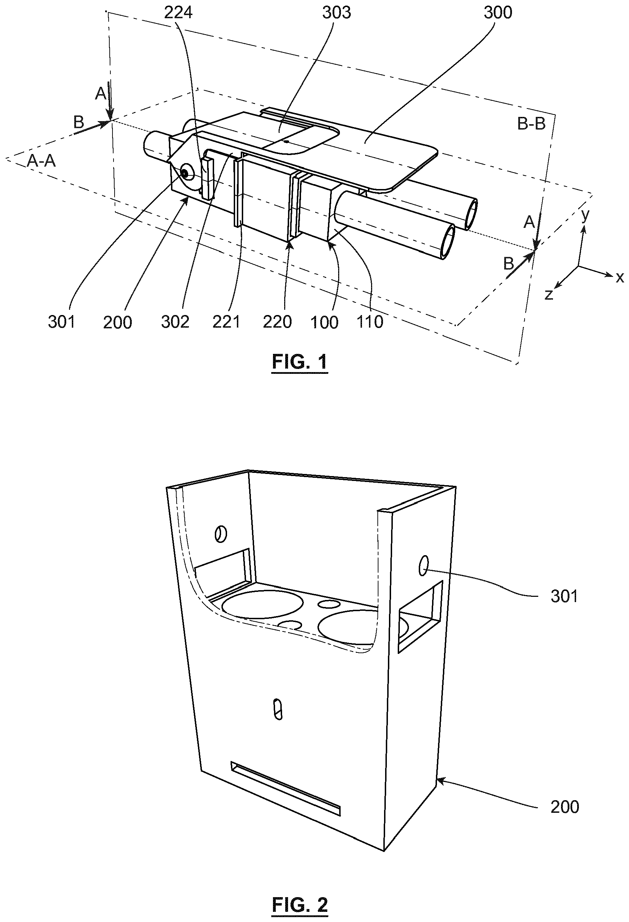

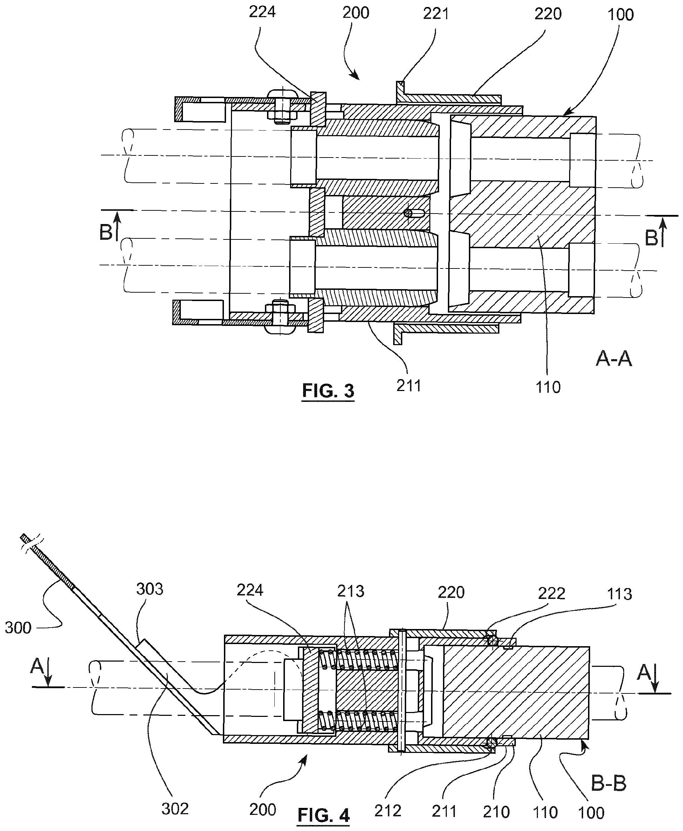

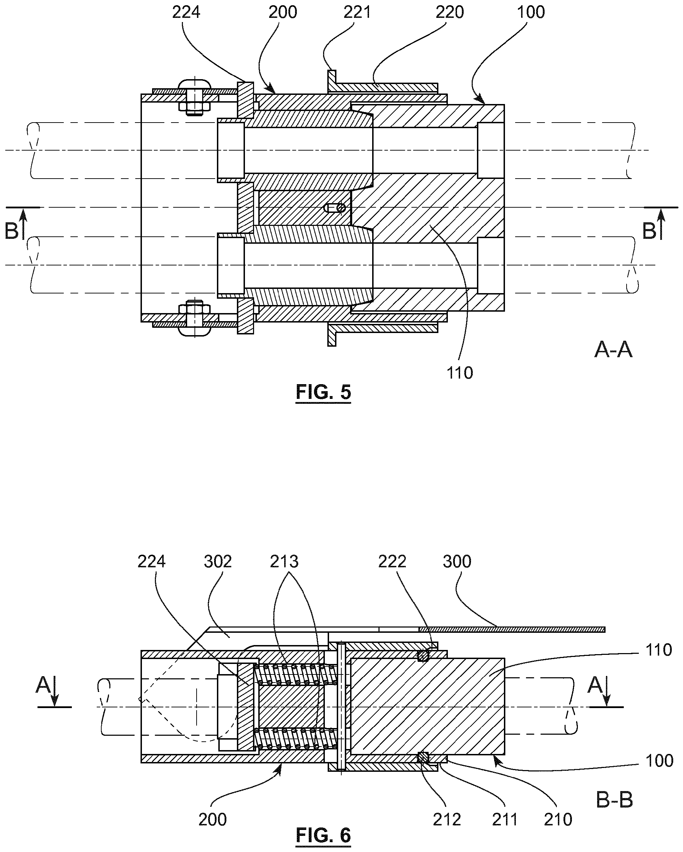

Les figures 1 à 6 montrent un système de raccordement de connecteurs de deux unités de climatisation à position de verrouillage selon l'état de la technique, ce système n'étant cependant pas irréversible et son inviolabilité n'étant pas garantie.

Un tel système de raccordement comprend une partie mâle 100 d'un premier connecteur s'enclenchant par translation dans une partie femelle 200 d'un deuxième connecteur et au moins un élément de liaison qui, dans une position de verrouillage, empêche la translation entre la partie mâle 100 et femelle 200. Cet élément de liaison est au moins un boîtier d'enclenchement 220 qui peut être déplacé par action d'un opérateur.

La partie mâle 100 comprend un châssis 110 dont une portion pointe en vis-à-vis de la partie femelle 200. La partie mâle 110 comporte aussi une portion de préhension que l'opérateur peut saisir.

La partie femelle 200 comprend un châssis 210 dont une extrémité pointe vers la partie mâle 100. La partie femelle 200 porte un boîtier d'enclenchement 220 relativement mobile par rapport au châssis 210 de la partie femelle 200. Au moins un ressort de rappel 213, pouvant prendre appui à une de ses extrémités sur une barre de butée 224, permet la mise en position en saillie par rapport à la partie femelle 200 du boîtier d'enclenchement 220 qui est mobile en translation relativement au châssis 210 de la partie femelle 200 et alors en avant de la partie femelle 200 en pointant vers la partie mâle 100 quand celle-ci sera avancée vers la partie femelle 200.

Sur sa paroi extérieure 211, le châssis 210 de la partie femelle 200 comprend au moins un élément roulant 212 destinée à coopérer avec une rainure 113 portée par le châssis 110 de la partie mâle 100.

Le boîtier d'enclenchement 220 comprend une butée de préhension 221 pour l'opérateur. En son intérieur, le boîtier d'enclenchement 220 comprend au moins un espace de dégagement 222 dudit au moins un élément roulant 212 porté par la paroi extérieure 211 du châssis 210 de la partie femelle 200, ce qui va permettre un déplacement dudit au moins un élément roulant 212 par le boîtier d'enclenchement 220 transversalement à la partie femelle 200.

Enfin, le système de raccordement comprend un volet 300 associé à la partie mâle 100 ou la partie femelle 200 qui est pivotant autour d'un axe de pivotement 301 disposé à une de ses extrémités. L'axe de pivotement 301 traverse une des deux parties mâle 100 ou femelle 200 à une extrémité la plus éloignée de l'autre des deux parties femelle 200 ou mâle 100. Le volet comporte aussi une lumière 303 et au moins un ergot 302 avantageusement latéral, ledit au moins un ergot 302 étant destiné à bloquer le boîtier d'enclenchement 220, ceci de manière non irréversible, quand le volet 300 est rabattu contre l'autre des parties mâle 100 ou femelle 200 ne portant pas le volet.

Le montage du raccordement se fait comme suit :
Afin de connecter les deux portions mâle 100 et femelle 200, un opérateur va, dans un premier temps, positionner le boîtier d'enclenchement 220 de la partie femelle 200 dans une position arrière, c'est-à-dire éloignée de la partie mâle 100 destinée à être raccordée à la partie femelle 200. Ce positionnement arrière se fait par translation vis-à-vis du châssis 210 de la partie femelle 200, ce qui compresse ledit au moins un ressort de rappel 213 logé dans la partie femelle 200. Cette position arrière du boîtier d'enclenchement 220 permet à l'espace de dégagement 222 d'être aligné avec ledit au moins un élément roulant 212 portée par la paroi extérieure 211 du châssis 210 de la partie femelle 200.

De ce fait, ledit au moins un élément roulant 212 peut effectuer un déplacement suivant une direction perpendiculaire à la translation réalisée par le boîtier d'enclenchement 220.

L'utilisateur va ensuite présenter la partie mâle 100 dans la partie femelle 200. Lors du raccordement des portions mâle 100 et femelle 200, ledit au moins un élément roulant 212 vient se positionner dans la rainure 113 du châssis 110 de la partie mâle 100 en quittant l'espace de dégagement 222 du boîtier d'enclenchement 220.

Après relâchement du boîtier d'enclenchement 220 qui retourne vers la partie mâle 100 sous l'action dudit au moins un ressort de rappel 213, le boîtier d'enclenchement 220 va venir contre une butée portée par le châssis 110 de la partie mâle 100. Dans cette position, ledit au moins un élément roulant 212 ne peut plus effectuer un déplacement transversal au châssis 210 de la partie femelle 200 et reste enclenchée dans la rainure 113 du châssis 110. Ceci empêche la déconnexion des raccords par limitation des mouvements translatifs des deux portions mâle 100 et femelle 200 entre elles.

Pour le verrouillage du système dans cette position, l'opérateur va ensuite positionner le volet 300 depuis une position d'ouverture vers une position de fermeture dans laquelle le volet 300 est appliqué contre le système de raccordement. Dans la position de fermeture, au moins un ergot 302 latéral présent sur le volet 300 vient se positionner derrière la butée de préhension 221 du boîtier d'enclenchement 220.

Ainsi, la translation du boîtier d'enclenchement 220 vis-à-vis du châssis 210 n'est plus possible. Le système est verrouillé mais peut cependant être déverrouillé de manière simple en relevant le volet 300 appliqué contre le système.

Selon un autre état de la technique, le document WO-A-95/30106 décrit un dispositif d'accouplement pour relier ensemble les extrémités opposées d'une conduite d'écoulement de réfrigérant sous pression en utilisant un dispositif de connexion rapide. Une première structure avec une première soupape montée dans un boîtier remplit une fonction de connexion rapide pour retenir une deuxième structure et une deuxième soupape.

En étant connectées ensemble, la première structure et la première soupape sont déplacées axialement par rapport à la deuxième structure et la deuxième soupape, tandis que la seconde structure est maintenue dans une position fixée axialement dans le boîtier. Une première vanne axiale engage une deuxième vanne axiale, en étant déplacée par rapport à la structure d'une position fermée à une position ouverte. Le déplacement de la première structure dans une direction axiale est réalisé par des cames actionnées par une poignée rotative montée sur le boîtier.

En analogie avec l'état de la technique illustré aux figures 1 à 6, un tel dispositif d'accouplement ne garantit pas l'inviolabilité de la connexion fluidique au cours du temps, et, particulièrement, ne prévient pas les mauvaises manipulations des utilisateurs après montage.

Le problème à la base de la présente invention est pour un système de raccordement de connecteurs de deux unités de climatisation, chacun des connecteurs comprenant deux tuyaux entre une partie mâle pénétrant dans une partie femelle, de rendre irréversible le raccordement une fois que celui-ci a été accompli.

### RÉSUMÉ DE L'INVENTION

A cet effet, la présente invention concerne un système de raccordement d'un premier et d'un deuxième connecteurs de deux unités de climatisation, chacun des premier et deuxième connecteurs comprenant deux tuyaux, le système de raccordement comprenant une partie mâle d'un premier connecteur s'enclenchant par translation dans une partie femelle d'un deuxième connecteur et au moins un premier et un deuxième élément de liaison, lesdits premier élément de liaison et deuxième élément de liaison sont configurés pour avoir une position déverrouillée et une position de verrouillage, ladite position de verrouillage est configurée pour empêcher la translation entre les parties mâle et femelle, caractérisé en ce que :
- le premier élément de liaison comprend un boitier d'enclenchement mobile en translation ;
- le deuxième élément de liaison comprend volet un mobile en rotation ;
et dans lequel l'un au moins desdits premier élément de liaison et deuxième élément de liaison comprend au moins un élément de blocage configuré pour rendre irréversible la position de verrouillage du premier élément de liaison et/ou du deuxième élément de liaison.

On entend par verrouillage irréversible un verrouillage empêchant une déconnexion entre les portions mâle et femelle sans casser un élément du système de raccordement ou sans outils spécifiques manipulables exclusivement par un professionnel, le déverrouillage endommageant partiellement certains éléments. Ainsi, un opérateur non professionnel ne peut pas de lui-même, sans l'endommager au moins partiellement, démonter le système de raccordement en respect des exigences législatives pour empêcher le rejet dans l'air de gaz réfrigérants toxiques pour l'environnement.

Un autre aspect de l'invention concerne un procédé de montage de raccordement d'un premier et d'un deuxième connecteurs de deux unités de climatisation, chacun des premier et deuxième connecteurs comprenant deux tuyaux pour un système de raccordement selon l'une quelconque des revendications précédentes, comportant une étape d'enclenchement par translation d'une partie mâle d'un premier connecteur dans une partie femelle d'un deuxième connecteur et au moins une étape de verrouillage empêchant une translation entre les parties mâle et femelle, caractérisé en ce qu'il comprend une étape de blocage en position de verrouillage est effectuée automatiquement pour rendre la position de verrouillage irréversible.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- la figure 1 est une représentation schématique d'une vue en perspective d'un système de raccordement de connecteurs de deux unités de climatisation, chacun des connecteurs comprenant deux tuyaux, selon l'état de la technique, cette figure illustrant plusieurs lignes de coupe A-A et B-B utilisées dans les figures qui vont suivre,
- la figure 2 est une représentation schématique d'une vue en perspective d'un carter de réception d'une partie femelle d'un système de raccordement selon l'état de la technique,
- les figures 3 et 5 sont des représentations schématiques de vues en coupe A-A d'un système de raccordement selon l'état de la technique dans des positions respectives d'éloignement et de rapprochement des parties mâle et femelle d'un système de raccordement selon l'état de la technique,
- les figures 4 et 6 sont des représentations schématiques de vues en coupe B-B d'un système de raccordement selon l'état de la technique dans des positions respectives d'éloignement et de rapprochement des parties mâle et femelle d'un système de raccordement selon l'état de la technique, un volet de verrouillage étant visible à ces figures respectivement en positions d'ouverture et de fermeture,
- les figures 7 et 9 sont des représentations schématiques de vues en coupe A-A d'un système de raccordement selon un premier mode conforme à la présente invention dans des positions respectives d'éloignement et de rapprochement des parties mâle et femelle,

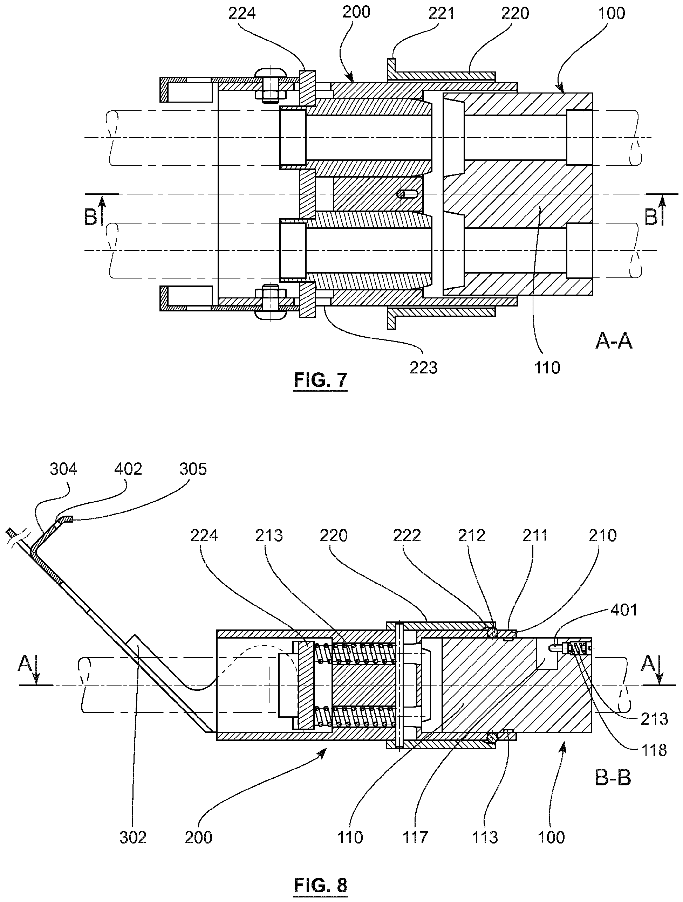

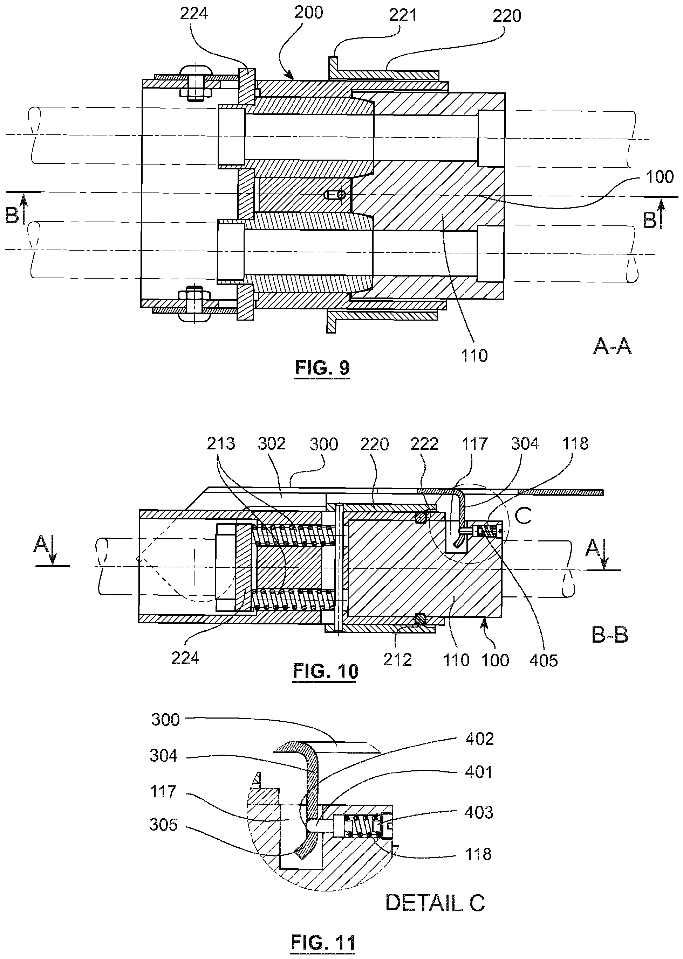

- les figures 8 et 10 sont des représentations schématiques de vues en coupe B-B d'un système de raccordement selon le premier mode conforme à la présente invention dans des positions respectives d'éloignement et de rapprochement des parties mâle et femelle du système de raccordement, un volet de verrouillage étant visible à ces figures respectivement en position d'ouverture et de fermeture et une partie des éléments de blocage configurés pour rendre la position de verrouillage irréversible étant portée par une extrémité libre du volet dans ce premier mode de réalisation et l'autre par la partie mâle,
- la figure 11 est une représentation schématique d'une portion agrandie de la figure 10 relative à l'élément de blocage porté par une extrémité libre du volet selon le premier mode de réalisation conforme à la présente invention,
- les figures 12 et 14 sont des représentations schématiques de vues en coupe A-A d'un système de raccordement selon un deuxième mode conforme à la présente invention dans des positions respectives d'éloignement et de rapprochement des parties mâle et femelle du système de raccordement,
- les figures 13 et 15 sont des représentations schématiques de vues en coupe B-B d'un système de raccordement selon le deuxième mode conforme à la présente invention dans des positions respectives d'éloignement et de rapprochement des parties mâle et femelle du système de raccordement, une partie des éléments de blocage configurés pour rendre la position de verrouillage irréversible étant portée par la partie femelle et l'autre par la partie mâle,
- les figures 16 et 18 sont des représentations schématiques de vues en coupe A-A d'un système de raccordement selon un troisième mode conforme à la présente invention dans des positions respectives d'éloignement et de rapprochement des parties mâle et femelle du système de raccordement,
- les figures 17 et 19 sont des représentations schématiques de vues en coupe B-B d'un système de raccordement selon le troisième mode conforme à la présente invention dans des positions respectives d'éloignement et de rapprochement des parties mâle et femelle du système de raccordement, une partie des éléments de blocage configurés pour rendre la position de verrouillage irréversible étant portée par un boîtier d'enclenchement et l'autre par la partie femelle, ceci vers l'arrière de la partie femelle,
- les figures 20 et 22 sont des représentations schématiques de vues en coupe A-A d'un système de raccordement selon un quatrième mode conforme à la présente invention dans des positions respectives d'éloignement et de rapprochement des parties mâle et femelle du système de raccordement,
- les figures 21 et 23 sont des représentations schématiques de vues en coupe B-B d'un système de raccordement selon le quatrième mode conforme à la présente invention dans des positions respectives d'éloignement et de rapprochement des parties mâle et femelle du système de raccordement, une partie des éléments de blocage configurés pour rendre la position de verrouillage irréversible étant portée par un boîtier d'enclenchement vers l'avant du boîtier et l'autre par la partie femelle.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions des différentes pièces ne sont pas représentatives de la réalité.

Dans ce qui va suivre, il est fait référence à toutes les figures prises en combinaison. Quand il est fait référence à une ou des figures spécifiques, les autres figures sont à prendre en combinaison avec ces figures spécifiques pour la reconnaissance des références numériques désignées non présentes sur ces figures spécifiques.

Dans ce qui va suivre, « avant » ou « arrière » notamment pour les parties mâle et femelle du système de raccordement sont à prendre respectivement comme proche et éloigné de la connexion entre les parties mâle et femelle du système de raccordement, la portion avant de la partie mâle faisant face à la portion avant de la partie femelle en position montée du système de raccordement.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
- le au moins un élément de liaison comprend un premier élément de liaison mobile en translation et/ou un deuxième élément de liaison mobile en rotation.
- le premier élément de liaison mobile en translation comprend un boitier d'enclenchement et le deuxième élément de liaison mobile en rotation comprend un volet.
- le au moins un élément de blocage est configuré pour rendre irréversible l'un parmi le premier élément de liaison, et le deuxième élément de liaison.
- l'élément de blocage est configuré pour rendre irréversible la mobilité en translation du boitier d'enclenchement et la mobilité en rotation du volet.
- le au moins un élément de blocage comprend un élément à cliquet mobile selon un sens unique de rotation et/ou de translation.
- le au moins un élément de blocage comprend un système comprenant au moins un pêne coopérant avec au moins une gâche.
- le au moins un élément de blocage comprend un système comprenant au moins un pêne porté par l'un parmi la partie mâle, la partie femelle (200), le boitier d'enclenchement ou le volet coopérant avec au moins une gâche portée par l'autre parmi la partie mâle, la partie femelle, le boitier d'enclenchement ou le volet.
- ledit au moins un élément de blocage est au moins un pêne sous forme d'un téton porté par un premier élément du système coopérant par engagement avec au moins une gâche sous forme d'un évidement porté par un deuxième élément du système, un élément de rappel incorporé dans le premier élément rappelant en engagement ledit au moins un pêne dans ladite au moins une gâche. Un système pêne et gâche est simple et efficace pour le blocage du verrouillage en position.
- la partie femelle porte un boîtier d'enclenchement vers une extrémité en vis-à-vis de la partie mâle, le boîtier d'enclenchement recevant en son intérieur une portion d'extrémité de la partie mâle en vis-à-vis de la partie femelle jusqu'à une position montée de la partie mâle par rapport à la partie femelle, le boîtier d'enclenchement formant ledit au moins un élément de liaison et étant mobile en translation le long de la partie femelle. Le boîtier d'enclenchement de par sa capacité de translation le long de la partie femelle, sous l'action d'un opérateur, prend une position arrière, donc la plus éloignée de l'extrémité de la partie femelle destinée à être en vis-à-vis de la partie mâle, sur la partie femelle en début de réception de la partie mâle dans la partie femelle puis reprend une position vers l'avant de la partie femelle pour la position de verrouillage puis de blocage.
- le boîtier d'enclenchement ou la partie femelle porte au moins une gâche sous forme d'un évidement sur une paroi interne, ladite au moins une gâche étant en vis-à-vis d'au moins un pêne formant téton porté par la portion d'extrémité de la partie mâle quand la portion d'extrémité de la partie mâle est en position finale de réception à l'intérieur du boîtier d'enclenchement, ladite portion d'extrémité de la partie mâle logeant un élément de rappel poussant ledit au moins un pêne dans ladite au moins une gâche puis le maintenant dans ladite au moins une gâche dans la position finale de réception.
- le boîtier d'enclenchement ou la partie femelle portant sur un axe parallèle à un axe transversal au moins deux gâches opposées, la portion d'extrémité de la partie mâle portant deux pênes en vis-à-vis d'une gâche respective, l'élément de rappel étant intercalé entre les deux pênes dans un passage transversal à la portion d'extrémité de la partie mâle, le passage présentant des extrémités débouchant à la périphérie de la portion d'extrémité en étant opposées et en présentant chacun pêne respectif. Un tel dispositif de deux pênes et de deux gâches est symétrique selon un axe longitudinal au système de raccordement ce qui répartit l'effort de blocage sur les deux côtés longitudinaux du système de raccordement. Il y a donc moins de risque de coincement du dispositif lors du blocage. Le dispositif est aussi bien intégré à l'intérieur dans la partie mâle du système de raccordement et donc difficilement démontable.
- le boîtier d'enclenchement ou la partie femelle porte au moins une gâche sous forme d'un évidement sur une paroi interne, ladite au moins une gâche étant en vis-à-vis d'au moins un pêne formant téton porté par la partie femelle ou le boîtier d'enclenchement quand la portion d'extrémité de la partie mâle est en position finale de réception à l'intérieur du boîtier d'enclenchement, le boîtier d'enclenchement ou la partie femelle logeant un élément de rappel poussant ledit au moins un pêne dans ladite au moins une gâche puis le maintenant dans ladite au moins une gâche dans la position finale de réception.
- le boîtier d'enclenchement porte ledit au moins un pêne en vis-à-vis d'au moins une gâche portée par la partie femelle dans une portion de la partie femelle opposée à la partie mâle ou la partie femelle porte ledit au moins un pêne en vis-à-vis d'au moins une gâche portée par le boîtier d'enclenchement dans une portion en vis-à-vis de la partie mâle.
- l'un parmi la partie femelle ou le boîtier d'enclenchement est configuré pour porter au moins deux gâches opposées sur un axe transversal, l'autre parmi le boîtier d'enclenchement ou la partie femelle est configuré pour porter deux pênes en vis-à-vis desdites deux gâches respectives et un passage transversal, et dans lequel l'élément de rappel étant intercalé entre les deux pênes dans le passage transversal dudit boîtier d'enclenchement ou de ladite partie femelle, ledit passage présentant des extrémités débouchant à la périphérie du boîtier d'enclenchement ou de la partie femelle en étant opposées et en présentant chacun pêne respectif. Un tel dispositif de deux pênes et de deux gâches est symétrique selon un axe longitudinal au système, ce qui répartit l'effort de blocage sur les deux côtés longitudinaux du système de raccordement. Il y a donc moins de risque de coincement du dispositif lors du blocage. Le dispositif est aussi bien intégré à l'intérieur du système de raccordement et donc difficilement démontable.
- l'une parmi la partie mâle ou la partie femelle et de préférence la partie femelle porte un volet, ledit volet comprend une extrémité montée pivotante autour d'un axe de pivotement parallèle à un axe de largeur de l'une des parties mâle ou femelle portante et à une extrémité de cette partie la plus éloignée de l'autre des parties femelle ou mâle ne portant pas de volet, le volet étant pivotant entre une position d'ouverture pour laquelle une extrémité libre du volet opposée à l'extrémité montée pivotante est maintenue à distance de l'autre partie femelle ou mâle ne portant pas le volet et une position de fermeture dans laquelle le volet est rabattu contre l'autre partie femelle ou mâle. Un tel volet permet un verrouillage facilité par une action simple de rabattement faite manuellement par un opérateur.
- le volet est porté par la partie femelle du système. Ceci est la position du volet la plus avantageuse pour le verrouillage puis le blocage en verrouillage.
- le volet porte à son extrémité libre au moins une gâche sous forme d'un évidement, ladite au moins une gâche coopérant avec au moins un pêne porté par l'autre parmi la partie femelle ou la partie mâle ne portant pas le volet, cette autre partie femelle ou mâle logeant un élément de rappel poussant ledit au moins un pêne dans ladite au moins une gâche puis le maintenant dans ladite au moins une gâche dans la position fermée du volet. Ce mode de réalisation est plus simple de mise en oeuvre que les autres modes de réalisation en ne demandant qu'une adaptation légère du volet.
- l'autre partie femelle ou mâle ne portant pas le volet présente un logement d'insertion d'une patte recourbée portée vers l'extrémité libre du volet, ladite patte recourbée portant ladite au moins une gâche. La patte recourbée pointera vers la partie mâle en position rabattue du volet et assurera le blocage en position de verrouillage du volet quand le volet est rabattu sur la partie mâle.
- ledit au moins un pêne et l'élément de rappel s'étendent dans le sens de la longueur de l'autre partie femelle ou mâle, ledit au moins un pêne pénétrant transversalement dans le logement d'insertion sous une action de l'élément de rappel.
- la patte recourbée présente une extrémité libre coudée en étant légèrement inclinée vers l'extrémité montée pivotante du volet de manière à repousser progressivement ledit au moins un pêne hors du logement d'insertion en s'opposant à l'action de l'élément de rappel avant introduction dudit au moins un pêne dans ladite au moins une gâche. Ceci permet un escamotage progressif dudit au moins un pêne lors de l'introduction de la patte recourbée dans le logement d'insertion en le repoussant progressivement dans une cavité recevant le pêne et son élément de rappel et évite un maintien non désiré dudit au moins un pêne en position de saillie dans le logement d'insertion qui pourrait empêcher l'introduction de la patte recourbée dans le logement d'insertion.
- le ou chaque pêne présente un socle sur lequel appuie l'élément de rappel et un pion de forme arrondie présentant une extrémité libre pénétrant dans ladite au moins une gâche. Le socle assure un appui consistant pour l'élément de rappel sur ledit au moins un pêne et le pion arrondi permet une meilleure introduction dudit au moins un pêne dans ladite au moins une gâche sans que ledit au moins un pêne ne soit trop pointu.
- le volet porte un dispositif de roue à cliquet positionné au niveau de l'axe de pivotement du volet, la roue à cliquet n'autorisant le pivotement du volet que dans un sens vers la position de fermeture. Ce mode de réalisation bien qu'avec un élément de blocage extérieur au système de raccordement est très efficace et irréversible.
- la partie mâle porte au moins une rainure et la partie femelle porte au moins un élément roulant, ledit au moins un élément roulant pénétrant dans ladite au moins une rainure de la partie mâle en position montée de la partie mâle dans la partie femelle, le boîtier d'enclenchement présentant au moins un espace de dégagement pour la réception de ledit au moins un élément roulant tant que ledit au moins un élément roulant n'est pas dans ladite au moins une rainure de la partie mâle, le boîtier d'enclenchement étant rappelé vers la partie mâle sous l'action d'au moins un ressort de rappel intégré dans la partie femelle ou du volet en position de fermeture quand ledit au moins un élément roulant est dans ladite au moins une rainure de la partie mâle, le volet, dans sa position de fermeture, comportant au moins un ergot bloquant en translation le boîtier d'enclenchement en éloignement de la partie mâle.

Quand l'opérateur présente la partie mâle dans la partie femelle, ledit au moins un élément roulant vient se positionner dans ladite au moins une rainure de la partie mâle. Après relâchement du boîtier d'enclenchement par un opérateur, le boîtier d'enclenchement va venir vers la partie mâle. Dans cette position, ledit au moins un élément roulant ne peut plus effectuer de déplacement transversal dans l'espace de dégagement. Ledit au moins un élément roulant reste alors enclenchée dans ladite au moins une rainure. Cette caractéristique empêche la déconnexion des raccords par la limitation des mouvements de translation des deux parties mâle et femelle entre elles.
- dans le procédé selon l'invention, avantageusement, quand la partie mâle porte au moins une rainure, la partie femelle porte au moins un élément roulant, le système de raccordement comportant un volet de verrouillage et un boîtier d'enclenchement présentant au moins un espace de dégagement pour la réception de ledit au moins un élément roulant en étant mobile en translation le long de la partie femelle, le procédé de montage comprend les étapes suivantes :
- translation du boîtier d'enclenchement le long de la partie femelle en éloignement de la portion de cette partie femelle destinée à être en vis-à-vis de la partie mâle avec réception de ledit au moins un élément roulant dans l'espace de dégagement,
- introduction de la partie mâle dans la partie femelle et réception de ledit au moins un élément roulant dans la rainure de la partie mâle, ledit au moins un élément roulant quittant l'espace de dégagement du boîtier d'enclenchement,
- rappel du boîtier d'enclenchement vers la partie mâle et verrouillage du boîtier d'enclenchement,
- lors de l'étape de blocage, introduction d'au moins un pêne dans au moins une gâche, lesdits au moins un pêne et une gâche étant portés respectivement par un de deux des éléments parmi une partie mâle, une partie femelle, un boîtier d'enclenchement ou un volet de verrouillage.

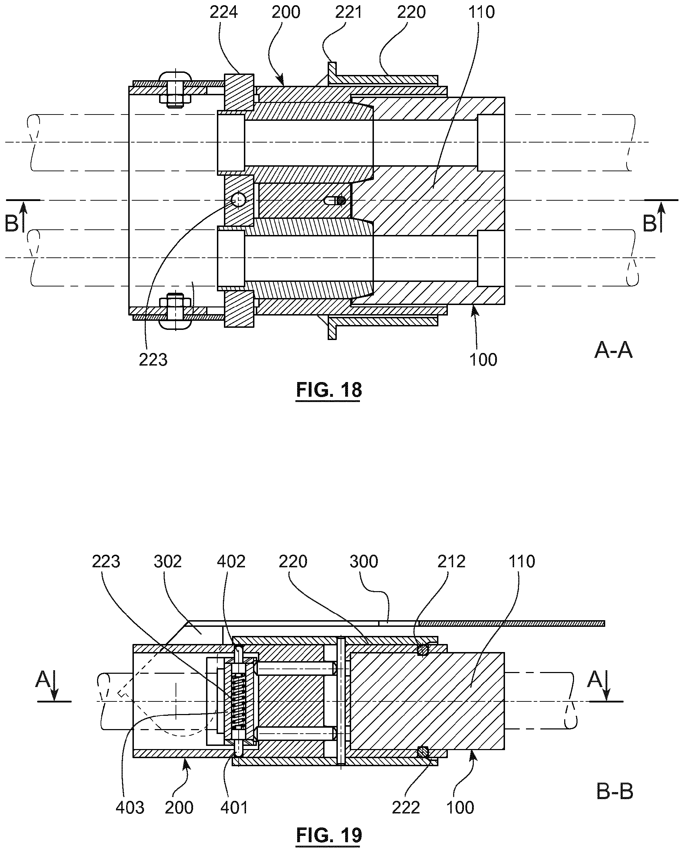

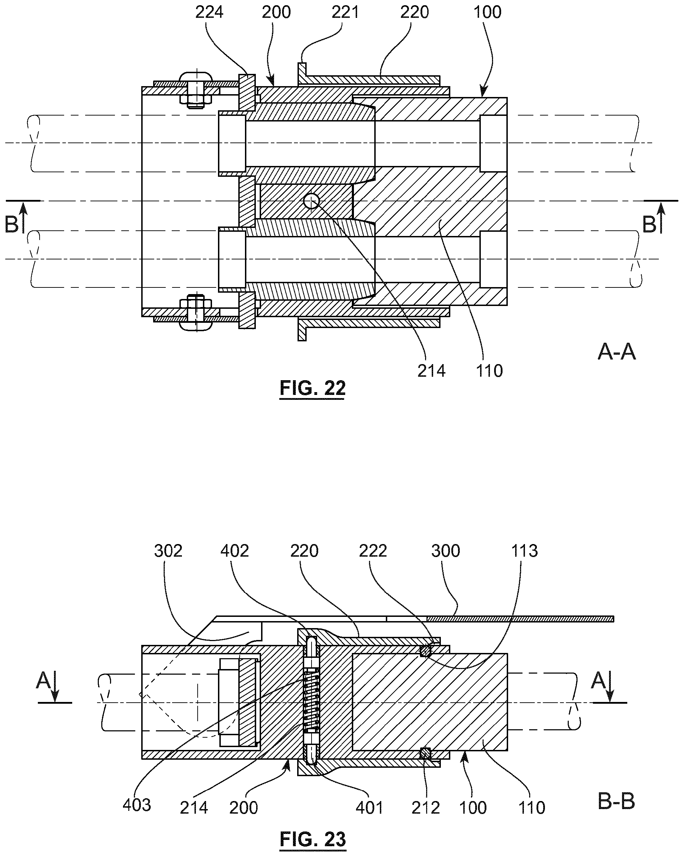

En se référant plus particulièrement aux figures 7 à 23, la présente invention concerne un système de raccordement de connecteurs de deux unités de climatisation, chacun des connecteurs comprenant deux tuyaux. Le système de raccordement comprend une partie mâle 100 d'un premier connecteur s'enclenchant par translation dans une partie femelle 200 d'un deuxième connecteur et au moins un élément de liaison qui, dans une position de verrouillage, empêche la translation entre la partie mâle 100 et femelle 200.

Pour la bonne compréhension de l'invention on entendra par :
- axe longitudinal, l'axe selon lequel les deux connecteurs sont en vis-à-vis l'un de l'autre.
- axe de largeur, l'axe perpendiculaire à l'axe longitudinal et définissant le plan de la coupe.

Les axes longitudinal et de largeur définissent le plan de la coupe B-B.
- axe transversal, l'axe étant perpendiculaire à la fois à l'axe longitudinal, et à l'axe de largeur.

Les axes longitudinal et transversal définissent le plan de la coupe A-A.

Selon la présente invention, afin de garantir l'irréversibilité de la position de verrouillage, le système de raccordement comprend au moins premier élément de liaison et deuxième élément de liaison et au moins un élément de blocage 400 configuré pour rendre la position de verrouillage irréversible.

Le premier élément de liaison est réalisé par un boitier d'enclenchement 220. Le premier élément de liaison est mobile en translation selon un axe longitudinal.

Le deuxième élément de liaison est de préférence un volet 300. Le volet 300 est mobile en rotation atour d'un axe de pivotement 301. Ledit axe de pivotement est parallèle à un axe de largeur.

Irréversible est à prendre dans le sens tel que précédemment mentionné c'est-à-dire que le déverrouillage est rendu très difficile et ne peut être accompli sans endommager certains éléments du système de raccordement ou sans outil spécifique ou non conventionnel par un professionnel.

Selon plusieurs modes préférentiels de réalisation de la présente invention, ledit au moins un élément de blocage 400 comprend au moins un pêne 401 sous forme d'un téton porté par un premier élément 100, 200, 220, 300 du système coopérant par engagement avec au moins une gâche 402 sous forme d'un évidement porté par un deuxième élément 220, 200, 100 du système.

Un élément de rappel 403 incorporé dans le premier élément 100, 200, 220, 300 peut rappeler en engagement ledit au moins un pêne 401 dans ladite au moins une gâche 402. Il peut y avoir plusieurs pênes 401 associés à plusieurs gâches 402, ces pênes 401 étant avantageusement symétriquement répartis sur les éléments 100, 200, 220, 300 les portant.

Dans les modes préférentiels de réalisation de la présente invention, ledit au moins un élément de blocage 400 est réalisé par un pêne 401 porté soit par un volet 300, un boîtier d'enclenchement 220 ou une partie femelle 200 coopérant avec une gâche 402 portée soit par la partie femelle 200, la partie mâle 100 ou le boîtier d'enclenchement 220. Différentes associations d'éléments de blocage 401, 402 sur des parties mâle 100 et femelle 200, boîtier d'enclenchement 220 et volet 300 sont possibles dont certaines vont être ci-après décrites.

Il va maintenant être détaillé différents modes préférentiels de réalisation dudit au moins un élément de blocage 400 en commençant par ceux relatifs à un volet 300 portant une partie des éléments de blocage.

En se référant notamment aux figures 7 à 11, comme précédemment mentionné selon l'état de la technique, une des parties mâle 100 ou femelle 200 porte un volet 300. Aux figures de la présente invention, c'est la partie femelle 200 qui porte un volet 300 mais ceci n'est pas limitatif.

Une extrémité du volet 300 peut être montée pivotante autour d'un axe de pivotement 301. Ledit axe 301 traversant avantageusement transversalement l'une parmi les parties mâle 100 ou femelle 200 à une extrémité de cette partie la plus éloignée de l'autre des parties femelle 200 ou mâle 100 ne portant pas de volet 300. Le volet 300 est pivotant entre une position d'ouverture pour laquelle une extrémité libre du volet 300 opposée à l'extrémité montée pivotante est maintenue à distance de l'autre partie femelle 200 ou mâle 100 ne portant pas le volet 300 et une position de fermeture dans laquelle le volet 300 est rabattu contre l'autre partie femelle 200 ou mâle 100. Une position d'ouverture est montrée par exemple à la figure 8 et une position de fermeture est montrée à la figure 10.

Dans ce premier mode préférentiel de réalisation, montré notamment aux figures 8 et 10, le volet 300 peut porter à son extrémité libre au moins une gâche 402 sous forme d'un évidement. Cette gâche 402 coopère avec un pêne 401 porté par l'autre partie femelle 200 ou mâle 100 ne portant pas le volet 300, aux figures 7 à 10 la partie mâle 100. Cette autre partie femelle 200 ou mâle 100 ne portant pas le volet 300 loge un élément de rappel 403 poussant ledit au moins un pêne 401 dans ladite au moins une gâche 402 puis le maintenant dans ladite au moins une gâche 402 dans la position fermée du volet 300.

Cette autre partie femelle 200 ou mâle 100 ne portant pas le volet 300, aux figures 7 à 11 la partie mâle 100, peut présenter un logement d'insertion 117. Ce logement d'insertion 117 est destiné à recevoir une patte recourbée 304 portée vers l'extrémité libre du volet 300, ladite patte recourbée 304 portant ladite au moins une gâche 402.

Cette patte recourbée 304 est avantageusement recourbée à 90° par rapport au volet 300. La patte recourbée 304 peut présenter une extrémité libre coudée 305 en étant légèrement inclinée vers l'extrémité montée pivotante du volet 300. Ceci permet de repousser progressivement ledit au moins un pêne 401 hors du logement d'insertion 117 en s'opposant à l'action de l'élément de rappel 403 avant introduction dudit au moins un pêne 401 dans ladite au moins une gâche 402.

En effet, une extrémité libre non coudée de la patte recourbée 304 arriverait en butée contre ledit au moins un pêne 401 en étant perpendiculaire au pêne 401 sans possibilité de faire rentrer ledit au moins un pêne 401 dans une cavité 118 associée qui loge en plus d'au moins une portion du pêne 401 aussi l'élément de rappel 403 donc hors du logement d'insertion 117 pratiqué dans l'autre partie ne portant pas le volet 300, aux figures la partie mâle 100. La cavité 118 de logement de l'élément de rappel 403 et dudit au moins un pêne 401 quand poussée contre l'action de l'élément de rappel 403 s'étend perpendiculairement au logement d'insertion 117 de la patte recourbée 304.

Comme il est visible notamment à la figure 8, ledit au moins un pêne 401 et l'élément de rappel 403 s'étendent dans le sens de la longueur de l'autre partie femelle 200 ou mâle 100, à cette figure la partie mâle 100. Ledit au moins un pêne 401 pénètre transversalement dans le logement d'insertion 117 sous une action de l'élément de rappel 403.

Dans ce premier mode préférentiel de réalisation selon la présente invention, il existe donc au moins un élément de blocage 400 porté par le volet 300 coopérant avec une gâche 402 porté par la partie mâle 100 et/ou femelle ne portant pas le volet 300.

Lorsque le volet 300 est rabattu, un pêne 401 porté par la partie mâle 100, avantageusement le châssis de partie mâle 100, s'engage dans ladite au moins une gâche 402 formée par l'évidement et empêche le changement de position dudit volet 300. Dans ce mode de réalisation, des outils spécifiques peuvent permettre uniquement à un professionnel de retirer ledit au moins un pêne 401.

Le verrouillage en position du volet 300 est considéré comme irréversible car il est impossible de faire rentrer ledit au moins un pêne 401 dans sa cavité 118 sauf en tordant la patte recourbée 304, en faisant sortir ensuite ledit au moins un pêne 401 de ladite au moins une gâche 402 et enfin en appuyant sur ledit au moins un pêne 401 pour le faire rentrer dans sa cavité 118 afin de faire sortir la patte recourbée 304 du logement. Avantageusement la patte recourbée 304 n'est pas située à une extrémité du volet, mais sur une portion intermédiaire. Ainsi, les possibilités d'accès au pêne sont extrêmement restreintes, cela renforce donc le caractère indémontable du système.

Il peut exister aussi un mode préférentiel de réalisation alternatif à ce premier mode préférentiel de réalisation, ce mode préférentiel de réalisation alternatif n'étant pas montré aux figures mais va être décrit avec les références numériques d'éléments de ce mode qui sont aussi communs aux autres modes.

Dans ce mode préférentiel de réalisation pouvant être qualifié de cinquième mode préférentiel de réalisation selon l'invention, l'élément de blocage est un élément à cliquet mobile selon un sens unique de rotation et/ou de translation. Par exemple, le volet 300 peut porter un dispositif de roue à cliquet positionné au niveau de l'axe de pivotement 301 du volet 300, la roue à cliquet n'autorisant le pivotement du volet 300 que dans un sens vers la position de fermeture.

Il faudrait casser la roue à cliquet pour rendre réversible le déverrouillage. Dans cette réalisation, la roue à cliquet est l'élément de blocage 400 conformément à la présente invention. Il peut donc exister dans le cadre de l'invention un seul élément de blocage, par exemple une roue à cliquet, et pas forcément deux éléments de blocage coopérant entre eux. Dans une autre réalisation, une crémaillère peut par exemple être configurée pour rendre impossible la translation entre la partie mâle et la partie femelle. Dans cette réalisation, l'élément de blocage est bien un élément à cliquet mobile selon un sens unique de translation.

Il va maintenant être détaillé les deuxième, troisième et quatrième modes préférentiels de réalisation selon la présente invention.

De manière générale, comme dans l'état de la technique, la partie femelle 200 du système de raccordement porte un boîtier d'enclenchement 220 vers une extrémité en vis-à-vis de la partie mâle 100. Le boîtier d'enclenchement 220 reçoit en son intérieur une portion d'extrémité 110 de la partie mâle 100 en vis-à-vis de la partie femelle 200 jusqu'à une position montée de la partie mâle 100 par rapport à la partie femelle 200. Le boîtier d'enclenchement 220 peut former ainsi au moins un élément de liaison dans le sens de l'invention. Le boîtier d'enclenchement 220 formant ledit au moins un élément de liaison peut être mobile en translation le long de la partie femelle 200.

Dans les deuxième, troisième et quatrièmes modes préférentiels de réalisation dudit au moins un élément de blocage 400 ainsi que dans des modes préférentiels de réalisation non illustrés aux figures mais rentrant dans le cadre de la présente invention, ledit au moins un élément de blocage 400 comporte au moins un pêne 401 porté par le boîtier d'enclenchement 220 coopérant avec au moins une gâche 402 portée par la partie mâle 100 et/ou la partie femelle 200.

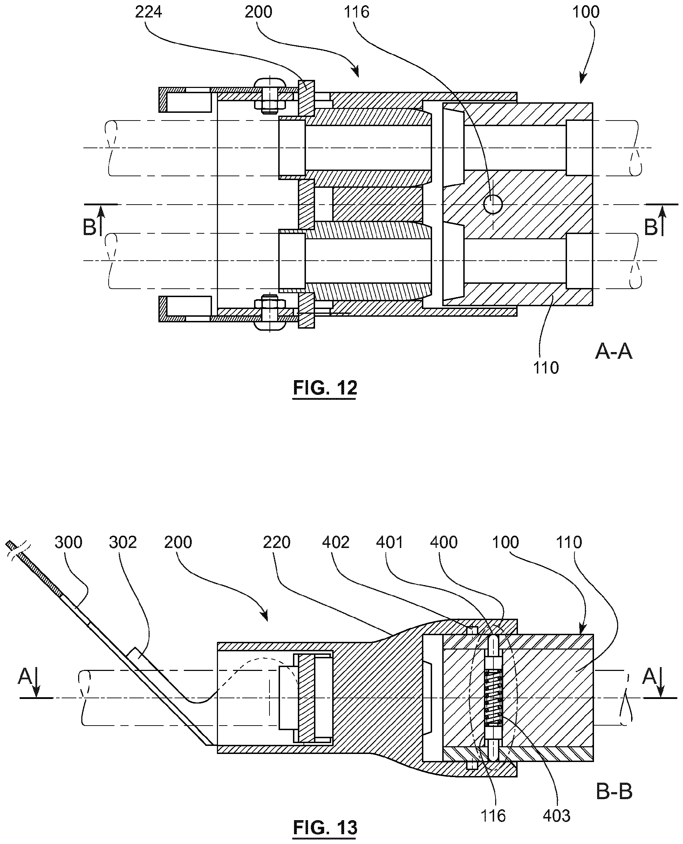

Dans le deuxième mode préférentiel de réalisation de la présente invention, montré aux figures 12 à 15, bien que le boîtier d'enclenchement n'est référencé qu'à la figure 13, le boîtier d'enclenchement ou la partie femelle 200 comme montré aux figures 12 à 15, peut porter au moins une gâche 402 sous forme d'un évidement sur une paroi interne. Ladite au moins une gâche 402 peut être en vis-à-vis d'au moins un pêne 401 formant téton porté par la portion d'extrémité 110 de la partie mâle 100 quand la portion d'extrémité 110 de la partie mâle 100 est en position finale de réception à l'intérieur du boîtier d'enclenchement ou de la partie femelle 200.

De plus, ladite portion d'extrémité 110 de la partie mâle 100 peut loger un élément de rappel 403 poussant ledit au moins un pêne 401 dans ladite au moins une gâche 402 puis le maintenant dans ladite au moins une gâche 402 dans la position finale de réception.

Une fois ledit au moins un pêne 401 enclenché dans ladite au moins une gâche 402, un élément de rappel 403 empêche la rétractation dudit au moins un pêne 401 et rend irréversible le désenclenchement de la partie mâle 100 par rapport à au boîtier d'enclenchement 220 ou la partie femelle 200.

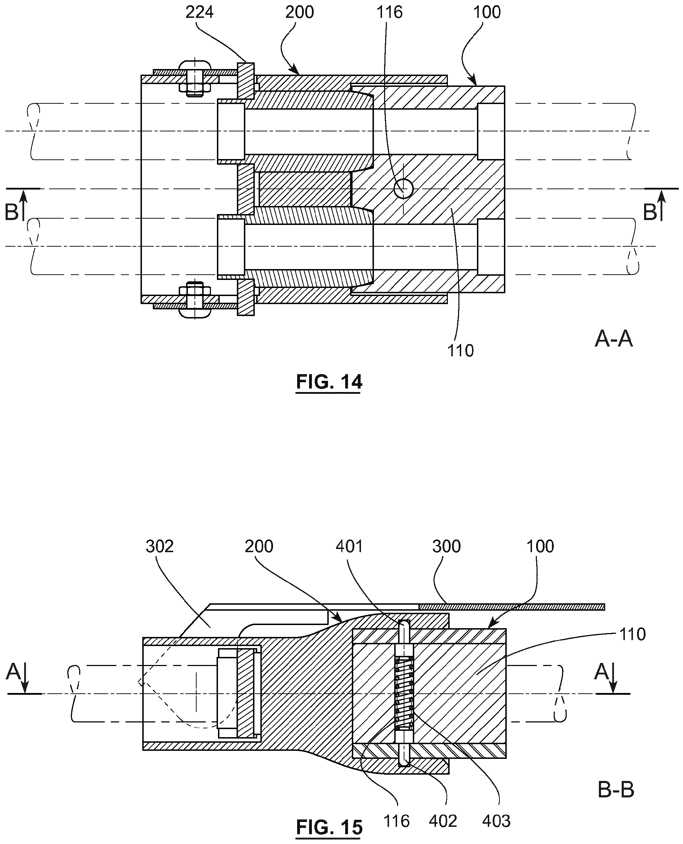

Comme il est visible notamment aux figures 13 et 15 pour la partie femelle 200, le boîtier d'enclenchement 220, la portion d'extrémité de la partie femelle 200 et la portion d'extrémité 110 de la partie mâle 100 peuvent être cylindriques. Le boîtier d'enclenchement 200 ou la partie femelle 200 peuvent porter au moins deux gâches 402. Dans la réalisation où la partie femelle 200 et la portion d'extrémité 110 de la partie mâle 100 sont cylindrique, les au moins deux gâches 402 sont diamétralement opposées et la portion d'extrémité 110 de la partie mâle 100 peut porter deux pênes 401 en vis-à-vis d'une gâche 402 respective. Dans l'hypothèse dans laquelle la partie femelle 200 et la portion d'extrémité 110 de la partie mâle 100 ne sont pas cylindrique, les au moins deux gâches 402 sont opposées sur un axe parallèle à l'axe transversal et la portion d'extrémité 110 de la partie mâle 100 peut porter deux pênes 401 en vis-à-vis de gâches 402 respectives.

Dans ces cas, l'élément de rappel 403 peut être intercalé entre les deux pênes 401 dans un passage 116 transversal à la portion d'extrémité 110 de la partie mâle 100. Le passage 116 peut présenter des extrémités débouchant à la périphérie de la portion d'extrémité en étant opposées et en présentant chacun pêne 401 respectif.

Il est apparent notamment de la figure 15 qu'en position de verrouillage par abaissement du volet 300, il est quasiment impossible de déverrouiller cette position car aucun accès n'est possible aux deux pênes 401 portés par la partie mâle 100. C'est le châssis 110 de la partie mâle 100 qui est porte préférentiellement le passage 116 contenant les pênes 401 et l'élément de rappel 403 intercalé entre les deux pênes 401.

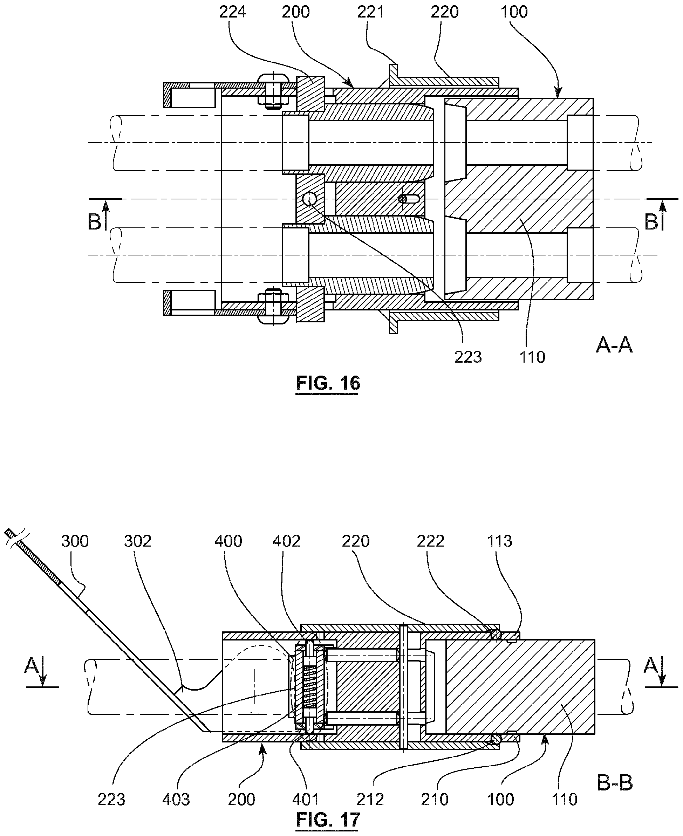

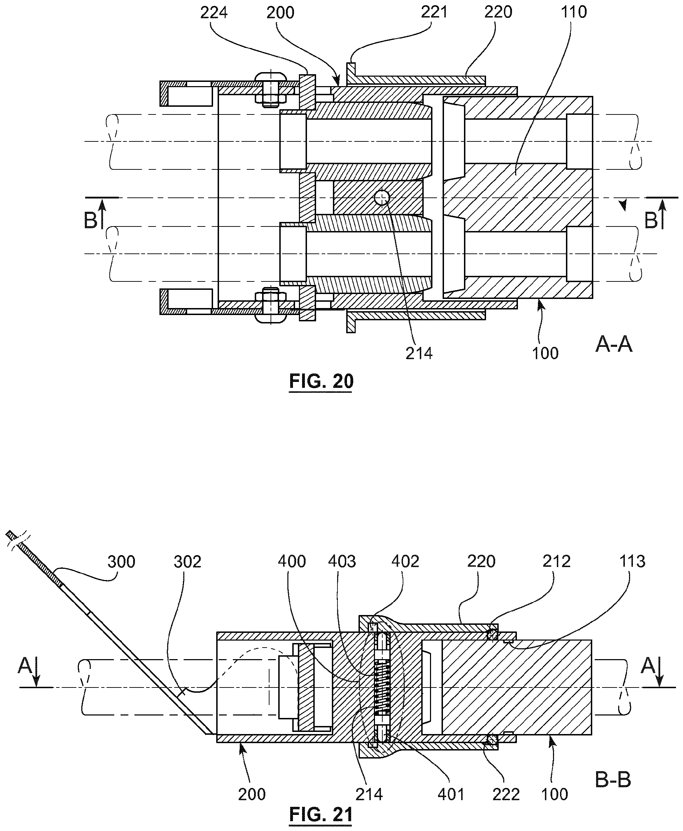

Le troisième mode préférentiel est illustré aux figures 16 à 19 et le quatrième mode préférentiel est illustré aux figures 20 à 23. Dans le troisième mode préférentiel de la présente invention, la partie femelle 200 peut porter au moins une gâche 402 sous forme d'un évidement sur une paroi interne.

Ladite au moins une gâche 402 peut être en vis-à-vis d'au moins un pêne 401 formant téton porté par le boîtier d'enclenchement 220 quand la portion d'extrémité 110 de la partie mâle 100 est en position finale de réception à l'intérieur du boîtier d'enclenchement 220. Le boîtier d'enclenchement 220 peut loger un élément de rappel 403 poussant ledit au moins un pêne 401 dans ladite au moins une gâche 402 puis le maintenant dans ladite au moins une gâche 402 dans la position finale de réception.

Les troisième et quatrième modes préférentiels de la présente invention sont sensiblement similaires aux différences près qu'ils sont inversés, étant donné que dans le quatrième mode, c'est le boîtier d'enclenchement 220 qui porte au moins une gâche 402 sous forme d'un évidement sur une paroi interne. Ladite au moins une gâche 402 est en vis-à-vis d'au moins un pêne 401 formant téton porté par la partie femelle 200 quand la portion d'extrémité 110 de la partie mâle 100 est en position finale de réception à l'intérieur du boîtier d'enclenchement 220.

De même que pour le deuxième mode préférentiel de la présente invention, le boîtier d'enclenchement 220 et la portion d'extrémité de la partie femelle 200 peuvent être cylindriques ou non. La partie femelle 200 ou le boîtier d'enclenchement 220 peuvent porter au moins deux gâches 402 diamétralement opposées ou opposées sur un axe parallèle à l'axe transversal, le boîtier d'enclenchement 220 ou la partie femelle 200 portant deux pênes 401 en vis-à-vis d'une gâche 402 respective.

Le boîtier d'enclenchement 220 ou la partie femelle 200 loge un élément de rappel 403 poussant ledit au moins un pêne 401 dans ladite au moins une gâche 402 puis le maintenant dans ladite au moins une gâche 402 dans la position finale de réception.

L'élément de rappel 403 peut être intercalé entre les deux pênes 401 dans un passage 223, 214 transversal au boîtier d'enclenchement 220 ou à la partie femelle 200. Le passage 223, 214 peut présenter des extrémités débouchant à la périphérie du boîtier d'enclenchement 220 ou de la partie femelle 200 en étant opposées et en présentant chacun pêne 401 respectif.

Une autre différence entre ces troisième et quatrième modes préférentiels est que, dans le troisième mode, le boîtier d'enclenchement 220 porte ledit au moins un pêne 401 en vis-à-vis d'au moins une gâche 402 portée par la partie femelle 200 dans une portion de la partie femelle 200 opposée à la partie mâle 100 donc la plus éloignée entre la connexion des parties mâle 100 et femelle 200, position dite arrière.

Au contraire, dans le quatrième mode, la partie femelle 200 porte ledit au moins un pêne 401 en vis-à-vis d'au moins une gâche 402 portée par le boîtier d'enclenchement 220 dans une portion en vis-à-vis de la partie mâle 100, donc à proximité de la connexion entre parties mâle 100 et femelle 200, position dite avant.

Dans ces troisième et quatrième modes préférentiels de la présente invention, il est possible de ne pas utiliser de ressort de rappel 213, contrairement à ce qui a été montré aux figures 8 et 10 du précédent mode de réalisation. Son action est alors remplacée par celle d'un opérateur poussant le boîtier d'enclenchement 220 vers l'avant.

L'élément de rappel 403 rend irréversible l'enclenchement dudit au moins un pêne 401 dans ladite au moins une gâche 402. Dans cette configuration, si le boîtier d'enclenchement 220 est bloqué en position avant, alors au moins un élément roulant 212 ne peut pas se désenclencher d'une rainure 113 pratiquée sur la partie mâle 100, avantageusement sur la paroi externe du châssis. La translation entre les deux portions mâle et femelle est bien irréversible. Avantageusement, l'élément roulant 212 est porté par la partie femelle 200 et de préférence par le châssis 210 de la partie femelle 200. Avantageusement, l'élément roulant 212 est traversant de la surface du châssis 210 et mobile selon une direction perpendiculaire à la direction longitudinale des connecteurs. Avantageusement, l'élément roulant peut-être un rouleau et/ou une bille.

Pour les deuxième, troisième et quatrième modes préférentiels de la présente invention, chaque pêne 401 peut présenter un socle sur lequel appuie l'élément de rappel 403. A son autre extrémité chaque pêne 401 peut comporter un pion présentant une extrémité libre pénétrant dans ladite au moins une gâche 402, l'extrémité avant de ce pion pointant vers ladite au moins une gâche 402 étant de forme arrondie.

Il va maintenant être détaillé un mode de réalisation du verrouillage du système de raccordement, ce verrouillage étant ensuite bloqué par ledit au moins un élément de blocage 400.

Dans ce mode de réalisation du verrouillage du système de raccordement, la partie mâle 100 peut porter au moins une rainure 113 et la partie femelle 200 porte au moins un élément roulant 212. Ledit au moins un élément roulant 212 peut pénétrer dans ladite au moins une rainure 113 de la partie mâle 100 en position montée de la partie mâle 100 dans la partie femelle 200.

Le boîtier d'enclenchement 220 peut présenter au moins un espace de dégagement 222 pour la réception de ledit au moins un élément roulant 212, ceci par un mouvement transversal ou radial de ledit au moins un élément roulant 212 en éloignement du système de raccordement. Ledit au moins un élément roulant 212 est introduite dans l'espace de dégagement 222 du boîtier d'enclenchement 220 par action de l'opérateur déplaçant en translation le boîtier d'enclenchement 220 le long de la partie femelle 200 en éloignement de la partie mâle 100, c'est-à-dire vers l'arrière de la partie femelle 200.

Cependant, ledit au moins un élément roulant 212 peut pénétrer dans ladite au moins une rainure 113 de la partie mâle 100, ceci en position montée de la partie mâle 100 dans la partie femelle 200. Ledit au moins un élément roulant 212 quitte alors l'espace de dégagement 222 du boîtier d'enclenchement 220 pour pénétrer dans ladite au moins une rainure 113 de la partie mâle 100. L'espace de dégagement 222 du boîtier d'enclenchement 220 poussé vers l'arrière loge donc ledit au moins un élément roulant 212 tant que l'élément roulant212 n'est pas en vis-à-vis de ladite au moins une rainure 113 de la partie mâle 100 et pénètre alors dans ladite au moins une rainure 113.

Le boîtier d'enclenchement 220 peut être rappelé vers la partie mâle 100 sous l'action d'au moins un ressort de rappel 213 intégré dans la partie femelle 200. En alternative, ce rappel vers la partie mâle 100 peut être assuré par un volet 300 en position de fermeture présentant au moins un ergot 302 poussant le boîtier d'enclenchement 220 vers l'avant et bloquant en translation le boîtier d'enclenchement 220 en éloignement de la partie mâle 100, c'est-à-dire contre un déplacement du boîtier d'enclenchement vers l'arrière de la partie femelle 200. Avantageusement, le au moins un ergot 302 est positionné sur une portion du volet 300 proche de son axe de rotation 301 lorsque ledit volet 300 est porté par la partie femelle 200. A l'inverse, si le volet 300 est porté par la partie mâle 100, alors le au moins un ergot 302 est positionné sur une portion du volet 300 plus éloignée de son axe de rotation 301. En alternative, ceci peut aussi être fait par une action manuelle de l'opérateur. Ceci a lieu quand ledit au moins un élément roulant 212 est dans ladite au moins une rainure 113 de la partie mâle 100.

L'invention concerne aussi un procédé de montage de raccordement de connecteurs de deux unités de climatisation, chacun des connecteurs comprenant deux tuyaux pour un système de raccordement tel que précédemment décrit. Le procédé comporte une étape d'enclenchement par translation d'une partie mâle 100 d'un premier connecteur dans une partie femelle 200 d'un deuxième connecteur. Cette étape est suivie par une étape de verrouillage empêchant une translation entre les parties mâle 100 et femelle 200.

Selon la présente invention, le procédé de montage comprend une étape de blocage s'effectuant automatiquement en fin d'étape de verrouillage pour rendre la position de verrouillage irréversible, ceci notamment par l'utilisation d'au moins un pêne 401 et d'au moins une gâche 402 coopérant ensemble ou d'un mécanisme à cliquet empêchant le volet 300 ou le boîtier d'enclenchement 220 de quitter leur position de verrouillage. Automatiquement signifie que cette étape de blocage est induite par l'étape de verrouillage et ne demande pas une étape supplémentaire.

Il va être décrit ci-après un mode de réalisation préférentiel du procédé dans lequel la partie mâle 100 porte au moins une rainure 113, la partie femelle 200 porte au moins un élément roulant 212, le système de raccordement comprenant un volet 300 de verrouillage et un boîtier d'enclenchement 220 présentant au moins un espace de dégagement 222 pour la réception de ledit au moins un élément roulant 212 en étant mobile en translation le long de la partie femelle 200.

Dans ce mode de réalisation, le procédé de montage comprend une étape de translation du boîtier d'enclenchement 220 le long de la partie femelle 200 en éloignement de la portion de cette partie femelle 200 destinée à être en vis-à-vis de la partie mâle 100 avec réception de ledit au moins un élément roulant 212 dans l'espace de dégagement 222.

Ceci peut être fait sous l'action d'un opérateur qui va dans un premier temps positionner le boîtier d'enclenchement 220 de la partie femelle 200 dans une position arrière sur la partie femelle 200 c'est-à-dire la plus éloignée de l'extrémité de la partie femelle 200 destinée à recevoir la partie mâle 100. Cette translation vis-à-vis du châssis de la partie femelle 200 compresse le ressort de rappel 213 quand ce ressort est présent.

La position arrière permet audit espace de dégagement 222 d'être aligné avec ledit au moins un élément roulant 212. De ce fait, ledit au moins un élément roulant 212 peut effectuer un déplacement suivant une direction perpendiculaire à la translation réalisée par le boîtier d'enclenchement 220.

Cette étape est suivie par l'introduction de la partie mâle 100 dans la partie femelle 200, ceci sous l'action de l'opérateur et la réception de ledit au moins un élément roulant 212 dans la rainure 113 de la partie mâle 100, la rainure 113 se trouvant alors alignée avec ledit au moins un élément roulant 212. Ledit au moins un élément roulant 212 quitte l'espace de dégagement 222 du boîtier d'enclenchement 220 et est escamotée dans ladite au moins une rainure 113.

L'étape suivante est le rappel du boîtier d'enclenchement 220 vers la partie mâle 100 et le verrouillage du boîtier d'enclenchement 220. Ceci peut se faire sous l'action d'un opérateur, sous l'action d'un ressort de rappel 213 quand présent ou sous l'action de fermeture du volet 300, au moins un ergot 302 porté par le volet 300 poussant le boîtier d'enclenchement 220 vers la partie mâle 100 et empêchant un retour vers l'arrière du boîtier d'enclenchement 220.

Lors de l'étape de blocage, avant vers la fin de l'étape de blocage ou après cette étape de blocage, il est procédé à l'introduction d'au moins un pêne 401 dans au moins une gâche 402. Selon des modes alternatifs préférentiels de la présente invention, lesdits au moins un pêne 401 et gâche 402 peuvent être portés respectivement par un de deux des éléments parmi une partie mâle 100, une partie femelle 200, un boîtier d'enclenchement 220 ou un volet 300 de verrouillage.

L'invention n'est pas limitée aux modes de réalisations précédemment décrits et s'étend à tous les modes de réalisation couverts par les revendications.

### REFERENCES

- 100.: Partie mâle
- 110.: Châssis
- 113.: Rainure
- 116.: Passage
- 117.: Logement
- 118.: Cavité
- 200.: Partie femelle
- 210.: Châssis
- 211.: Paroi extérieure
- 212.: Élément roulant
- 213.: Ressort de rappel
- 214.: Passage
- 220.: Boîtier d'enclenchement
- 221.: Butée de préhension
- 222.: Espace de dégagement
- 223.: Passage
- 224.: Barre de butée
- 300.: Volet
- 301.: Axe de pivotement
- 302.: Ergot latéral
- 303.: Lumière
- 304.: Patte recourbée
- 305.: Extrémité coudée
- 400.: Elément de blocage
- 401.: Pêne
- 402.: Gâche
- 403.: Elément de rappel

## Revendications

1. Système de raccordement d'un premier et d'un deuxième connecteurs de deux unités de climatisation, chacun des premier et deuxième connecteurs comprenant deux tuyaux, le système de raccordement comprenant une partie mâle (100) d'un premier connecteur s'enclenchant par translation dans une partie femelle (200) d'un deuxième connecteur et au moins un premier et un deuxième élément de liaison, lesdits premier élément de liaison et deuxième élément de liaison sont configurés pour avoir une position déverrouillée et une position de verrouillage, ladite position de verrouillage est configurée pour empêcher la translation entre les parties mâle (100) et femelle (200), **caractérisé en ce que** :
- le premier élément de liaison comprend un boitier d'enclenchement (220) mobile en translation ;
- le deuxième élément de liaison comprend un volet (300) mobile en rotation ;
et dans lequel l'un au moins desdits premier élément de liaison et deuxième élément de liaison comprend au moins un élément de blocage (400) configuré pour rendre irréversible la position de verrouillage du premier élément de liaison et/ou du deuxième élément de liaison.

2. Système selon la revendication précédente dans lequel le au moins un élément de blocage comprend un élément à cliquet mobile selon un sens unique de rotation ou de translation.

3. Système selon l'une quelconque des revendications précédentes dans lequel le au moins un élément de blocage comprend un système comprenant au moins un pêne (401) porté par l'un parmi la partie mâle (100), la partie femelle (200), le boitier d'enclenchement (220) ou le volet (300) coopérant avec au moins une gâche (402) portée par l'autre parmi la partie mâle (100), la partie femelle (200), le boitier d'enclenchement (220) ou le volet (300).

4. Système selon la revendication précédente, dans lequel, un élément de rappel (403) est configuré pour engager et maintenir en position le au moins un pêne (401) dans la au moins une gâche (402).

5. Système selon la revendication précédente, dans lequel le boîtier d'enclenchement (220) ou la partie femelle (200) porte la au moins une gâche (402) sous forme d'un évidement sur une paroi interne, ladite au moins une gâche (402) étant en vis-à-vis du au moins un pêne (401) formant téton porté par la portion d'extrémité (110) de la partie mâle (100) quand la portion d'extrémité (110) de la partie mâle (100) est en position finale de réception à l'intérieur du boîtier d'enclenchement (220), ladite portion d'extrémité (110) de la partie mâle (100) logeant un élément de rappel (403) poussant ledit au moins un pêne (401) dans ladite au moins une gâche (402) puis le maintenant dans ladite au moins une gâche (402) dans la position finale de réception.

6. Système selon la revendication précédente, le boîtier d'enclenchement (220) ou la partie femelle (200) portant au moins deux gâches (402) opposées sur un axe transversal, la portion d'extrémité (110) de la partie mâle (100) portant deux pênes (401) en vis-à-vis d'une gâche (402) respective, l'élément de rappel (403) étant intercalé entre les deux pênes (401) dans un passage (116) transversal à la portion d'extrémité (110) de la partie mâle (100), le passage (116) présentant des extrémités débouchant à la périphérie de la portion d'extrémité (110) en étant opposées et en présentant chacun pêne (401) respectif.

7. Système selon la revendication 4, dans lequel l'un parmi le boîtier d'enclenchement (220) ou la partie femelle (200) porte la au moins une gâche (402) sous forme d'un évidement sur une paroi interne, ladite au moins une gâche (402) étant en vis-à-vis d'au moins un pêne (401) formant téton porté par l'autre parmi la partie femelle (200) ou le boîtier d'enclenchement (220) et dans lequel quand la portion d'extrémité (110) de la partie mâle (100) est en position finale de réception à l'intérieur du boîtier d'enclenchement (220), le boîtier d'enclenchement (220) ou la partie femelle (200) logeant un élément de rappel (403) est configuré pour pousser ledit au moins un pêne (401) dans ladite au moins une gâche (402) puis le maintenant dans ladite au moins une gâche (402) dans la position finale de réception.

8. Système selon la revendication précédente, dans lequel l'un parmi la partie femelle (200) ou le boîtier d'enclenchement (220) est configuré pour porter au moins deux gâches (402) opposées sur un axe transversal, l'autre parmi le boîtier d'enclenchement (220) ou la partie femelle (200) est configuré pour porter deux pênes (401) en vis-à-vis desdites deux gâches (402) respectives et un passage (223, 214) transversal, et dans lequel l'élément de rappel (403) étant intercalé entre les deux pênes (401) dans le passage (223, 214) transversal dudit boîtier d'enclenchement (220) ou de ladite partie femelle (200), ledit passage (223, 214) présentant des extrémités débouchant à la périphérie du boîtier d'enclenchement (220) ou de la partie femelle (200) en étant opposées et en présentant chacun pêne (401) respectif.

9. Système selon l'une quelconque des revendications précédentes, dans lequel l'une parmi la partie mâle (100) ou la partie femelle (200) et de préférence la partie femelle (200) porte un volet (300), ledit volet (300) comprend une extrémité montée pivotante autour d'un axe de pivotement (301) parallèle à un axe de largeur de l'une des parties mâle (100) ou femelle (200) portante et à une extrémité de cette partie la plus éloignée de l'autre des parties femelle (200) ou mâle (100) ne portant pas de volet (300), le volet (300) étant pivotant entre une position d'ouverture pour laquelle une extrémité libre du volet (300) opposée à l'extrémité montée pivotante est maintenue à distance de l'autre partie femelle (200) ou mâle (100) ne portant pas le volet (300) et une position de fermeture dans laquelle le volet (300) est rabattu contre l'autre partie femelle (200) ou mâle (100).

10. Système selon la revendication précédente, dans lequel le volet (300) porte à son extrémité libre au moins une gâche (402) sous forme d'un évidement, ladite au moins une gâche (402) coopérant avec au moins un pêne (401) porté par l'autre parmi la partie femelle (200) ou la partie mâle (100) ne portant pas le volet (300), cette autre partie femelle (200) ou mâle (100) logeant un élément de rappel (403) poussant ledit au moins un pêne (401) dans ladite au moins une gâche (402) puis le maintenant dans ladite au moins une gâche (402) dans la position fermée du volet (300).

11. Système selon la revendication précédente, dans lequel l'autre partie femelle (200) ou mâle (100) ne portant pas le volet (300) présente un logement d'insertion (117) d'une patte recourbée (304) portée vers l'extrémité libre du volet (300), ladite patte recourbée (304) portant ladite au moins une gâche (402).

12. Système selon la revendication précédente, dans lequel la patte recourbée (304) présente une extrémité libre coudée (305) en étant légèrement inclinée vers l'extrémité montée pivotante du volet (300) de manière à repousser progressivement ledit au moins un pêne (401) hors du logement d'insertion (117) en s'opposant à l'action de l'élément de rappel (403) avant introduction dudit au moins un pêne (401) dans ladite au moins une gâche (402).

13. Système selon l'une quelconque des revendications 5 à 8 et 10 à 12, dans lequel le ou chaque pêne (401) présente un socle sur lequel appuie l'élément de rappel (403) et un pion de forme arrondie présentant une extrémité libre pénétrant dans ladite au moins une gâche (402).

14. Système selon l'une quelconque des revendications précédentes, dans lequel la partie mâle (100) porte au moins une rainure (113) et la partie femelle (200) porte au moins un élément roulant (212), ledit au moins un élément roulant (212) pénétrant dans ladite au moins une rainure (113) de la partie mâle (100) en position montée de la partie mâle (100) dans la partie femelle (200), le boîtier d'enclenchement (220) présentant au moins un espace de dégagement (222) pour la réception de ledit au moins un élément roulant (212) tant que ledit au moins un élément roulant (212) n'est pas dans ladite au moins une rainure (113) de la partie mâle (100), le boîtier d'enclenchement (220) étant rappelé vers la partie mâle (100) sous l'action d'au moins un ressort de rappel (213) intégré dans la partie femelle (200) ou du volet (300) en position de fermeture quand ledit au moins un élément roulant (212) est dans ladite au moins une rainure (113) de la partie mâle (100), le volet (300), dans sa position de fermeture, comportant au moins un ergot (302) bloquant en translation le boîtier d'enclenchement (220) en éloignement de la partie mâle (100).

15. Procédé de montage de raccordement d'un premier et d'un deuxième connecteurs de deux unités de climatisation, chacun des premier et deuxième connecteurs comprenant deux tuyaux pour un système de raccordement selon l'une quelconque des revendications précédentes, le système de raccordement comprenant au moins un premier élément de liaison comprenant un boitier d'enclenchement (220) et un deuxième élément de liaison comprenant un volet (300), ledit procédé de montage de raccordement comportant une étape d'enclenchement par translation d'une partie mâle (100) d'un premier connecteur dans une partie femelle (200) d'un deuxième connecteur et au moins une étape de verrouillage empêchant une translation entre les parties mâle (100) et femelle (200), **caractérisé en ce qu'**il comprend une étape de translation du boitier d'enclenchement (220), une étape de rotation du volet (300), et une étape de blocage en position de verrouillage qui est effectuée automatiquement pour rendre la position de verrouillage irréversible.

## Patentansprüche

1. System zum Verbinden eines ersten und eines zweiten Anschlusses von zwei Klimaeinheiten, wobei jeder aus dem ersten und zweiten Anschluss zwei Rohre umfasst, wobei das Verbindungssystem einen männlichen Teil (100) eines ersten Anschlusses, der sich durch Translation in einem weiblichen Teil (200) eines zweiten Anschlusses verrastet, und mindestens ein erstes und ein zweites Fügeelement umfasst, wobei das erste Fügeelement und zweite Fügeelement so konfiguriert sind, dass sie eine entriegelte Stellung und eine Verriegelungsstellung aufweisen, wobei die Verriegelungsstellung so konfiguriert ist, dass sie die Translation zwischen dem männlichen (100) und weiblichen Teil (200) verhindert, **dadurch gekennzeichnet, dass**:
- das erste Fügeelement ein translationsbewegliches Rastgehäuse (220) umfasst;
- das zweite Fügeelement eine drehbewegliche Klappe (300) umfasst;
und wobei mindestens eines aus dem ersten Fügeelement und zweiten Fügeelement mindestens ein Sperrelement (400) umfasst, das so konfiguriert ist, dass es die Verriegelungsstellung des ersten Fügeelements und/oder des zweiten Fügeelements unumkehrbar macht.

2. System nach dem vorstehenden Anspruch, wobei das mindestens eine Sperrelement ein Klinkenelement umfasst, das in eine einzige Dreh- oder Translationsrichtung beweglich ist.

3. System nach einem der vorstehenden Ansprüche, wobei das mindestens eine Sperrelement ein System umfasst, das mindestens einen von einem aus dem männlichen Teil (100), dem weiblichen Teil (200), dem Rastgehäuse (220) oder der Klappe (300) getragenen Riegel (401) umfasst, der mit mindestens einem vom anderen aus dem männlichen Teil (100), dem weiblichen Teil (200), dem Rastgehäuse (220) oder der Klappe (300) getragenen Schließblech (402) zusammenwirkt.

4. System nach dem vorstehenden Anspruch, wobei ein Rückstellelement (403) so konfiguriert ist, dass es mit dem mindestens einen Riegel (401) in dem mindestens einen Schließblech (402) eingreift und denselben in Stellung hält.

5. System nach dem vorstehenden Anspruch, wobei das Rastgehäuse (220) oder der weibliche Teil (200) das mindestens eine Schließblech (402) in Form einer Aussparung an einer inneren Wand trägt, wobei das mindestens eine Schließblech (402) dem mindestens einen Riegel (401), der einen vom Endabschnitt (110) des männlichen Teils (100) getragenen Stift bildet, zugewandt ist, wenn sich der Endabschnitt (110) des männlichen Teils (100) in der endgültigen Aufnahmestellung im Inneren des Rastgehäuses (220) befindet, wobei der Endabschnitt (110) des männlichen Teils (100) ein Rückstellelement (403) beherbergt, das den mindestens einen Riegel (401) in das mindestens eine Schließblech (402) drückt und denselben anschließend in der endgültigen Aufnahmestellung in dem mindestens einen Schließblech (402) hält.

6. System nach dem vorstehenden Anspruch, wobei das Rastgehäuse (220) oder der weibliche Teil (200) mindestens zwei auf einer Querachse gegenüberliegende Schließbleche (402) trägt, wobei der Endabschnitt (110) des männlichen Teils (100) zwei Riegel (401) trägt, die einem jeweiligen Schließblech (402) zugewandt sind, wobei das Rückstellelement (403) zwischen den zwei Riegeln (401) in einem zum Endabschnitt (110) des männlichen Teils (100) quer verlaufenden Durchgang (116) eingefügt ist, wobei der Durchgang (116) Enden aufweist, die am Umfang des Endabschnitts (110) gegenüberliegend und jeder einen jeweiligen Riegel (401) aufweisend münden.

7. System nach Anspruch 4, wobei eines aus dem Rastgehäuse (220) oder dem weiblichen Teil (200) das mindestens eine Schließblech (402) in Form einer Aussparung an einer inneren Wand trägt, wobei das mindestens eine Schließblech (402) mindestens einem Riegel (401), der einen vom anderen aus dem weiblichen Teil (200) oder dem Rastgehäuse (220) getragenen Stift bildet, zugewandt ist, und wobei, wenn sich der Endabschnitt (110) des männlichen Teils (100) in der endgültigen Aufnahmestellung im Inneren des Rastgehäuses (220) befindet, das Rastgehäuse (220) oder der weibliche Teil (200), das/der ein Rückstellelement (403) beherbergt, so konfiguriert ist, dass es/er den mindestens einen Riegel (401) in das mindestens eine Schließblech (402) drückt und denselben anschließend in der endgültigen Aufnahmestellung in dem mindestens einen Schließblech (402) hält.

8. System nach dem vorstehenden Anspruch, wobei eines aus dem weiblichen Teil (200) oder dem Rastgehäuse (220) so konfiguriert ist, dass er/es mindestens zwei auf einer Querachse gegenüberliegende Schließbleche (402) trägt, wobei das andere aus dem Rastgehäuse (220) oder dem weiblichen Teil (200) so konfiguriert ist, dass es/er zwei Riegel (401), die den zwei jeweiligen Schließblechen (402) zugewandt sind, und einen quer verlaufenden Durchgang (223, 214) trägt, und wobei das Rückstellelement (403) zwischen den zwei Riegeln (401) in dem quer verlaufenden Durchgang (223, 214) des Rastgehäuses (220) oder des weiblichen Teils (200) eingefügt ist, wobei der Durchgang (223, 214) Enden aufweist, die am Umfang des Rastgehäuses (220) oder des weiblichen Teils (220) gegenüberliegend und jeder einen jeweiligen Riegel (401) aufweisend münden.

9. System nach einem der vorstehenden Ansprüche, wobei einer aus dem männlichen Teil (100) oder dem weiblichen Teil (200), und vorzugsweise der weibliche Teil (200) eine Klappe (300) trägt, die Klappe (300) ein Ende umfasst, das um eine Schwenkachse (301) schwenkbar montiert ist, die zu einer Breitenachse des einen aus dem tragenden männlichen (100) oder weiblichen Teil (200), und zu einem Ende dieses Teils parallel ist, das am weitesten vom anderen aus dem keine Klappe (300) tragenden weiblichen (200) oder männlichen Teil (100) entfernt ist, wobei die Klappe (300) zwischen einer Öffnungsstellung, bei der ein freies Ende der Klappe (300), das dem schwenkbar montierten Ende gegenüberliegt, in Abstand vom anderen, die Klappe (300) nicht tragenden weiblichen (200) oder männlichen Teil (100) gehalten wird, und einer Verschlussstellung schwenken kann, in der die Klappe (300) an den anderen weiblichen (200) oder männlichen Teil (100) angeklappt ist.

10. System nach dem vorstehenden Anspruch, wobei die Klappe (300) an ihrem freien Ende mindestens ein Schließblech (402) in Form einer Aussparung trägt, wobei das mindestens eine Schließblech (402) mit mindestens einem Riegel (401) zusammenwirkt, der vom anderen aus dem weiblichen Teil (200) oder dem männlichen Teil (100), der nicht die Klappe (300) trägt, getragen wird, wobei dieser andere weibliche (200) oder männliche Teil (100) ein Rückstellelement (403) beherbergt, das den mindestens einen Riegel (401) in das mindestens eine Schließblech (402) drückt und denselben anschließend in der geschlossenen Stellung der Klappe (300) in dem mindestens einen Schließblech (402) hält.

11. System nach dem vorstehenden Anspruch, wobei der andere weibliche (200) oder männliche Teil (100), der nicht die Klappe (300) trägt, eine Aufnahme zum Einführen (117) einer gekrümmten Klaue (304) aufweist, die zum freien Ende der Klappe (300) hin getragen wird, wobei die gekrümmte Klaue (304) das mindestens eine Schließblech (402) trägt.

12. System nach dem vorstehenden Anspruch, wobei die gekrümmte Klaue (304) ein freies Ende (305) aufweist, das abgewinkelt ist, indem es leicht zu dem schwenkbar montierten Ende der Klappe (300) hin geneigt ist, um den mindestens einen Riegel (401) zunehmend aus der Einführaufnahme (117) herauszudrücken, indem es sich der Wirkung des Rückstellelements (403) vor dem Einführen des mindestens einen Riegels (401) in das mindestens eine Schließblech (402) entgegenstellt.

13. System nach einem der Ansprüche 5 bis 8 und 10 bis 12, wobei der oder jeder Riegel (401) einen Sockel, auf dem das Rückstellelement (403) aufliegt, und einen Zapfen von abgerundeter Form aufweist, der ein freies Ende aufweist, das in das mindestens eine Schließblech (402) eindringt.

14. System nach einem der vorstehenden Ansprüche, wobei der männliche Teil (100) mindestens eine Nut (113) trägt, und der weibliche Teil (200) mindestens ein Wälzelement (212) trägt, wobei das mindestens eine Wälzelement (212) in montierter Stellung des männlichen Teils (100) im weiblichen Teil (200) in die mindestens eine Nut (113) des männlichen Teils (100) eindringt, wobei das Rastgehäuse (220) mindestens einen Freiraum (222) zum Aufnehmen des mindestens einen Wälzelements (212) aufweist, solange sich das mindestens eine Wälzelement (212) nicht in der mindestens einen Nut (113) des männlichen Teils (100) befindet, wobei das Rastgehäuse (220) unter der Wirkung mindestens einer Rückstellfeder (213), die in den weiblichen Teil (200) integriert ist, oder der Klappe (300) in Verschlussstellung zum männlichen Teil (100) hin zurückgestellt wird, wenn sich das mindestens eine Wälzelement (212) in der mindestens einen Nut (113) des männlichen Teils (100) befindet, wobei die Klappe (300) in ihrer Verschlussstellung mindestens einen Ansatz (302) umfasst, der das Rastgehäuse (220) in Entfernung vom männlichen Teil (100) gegen Translation sperrt.

15. Verfahren zum Montieren einer Verbindung eines ersten und eines zweiten Anschlusses von zwei Klimaeinheiten, wobei jeder aus dem ersten und zweiten Anschluss zwei Rohre für ein Verbindungssystem nach einem der vorstehenden Ansprüche umfasst, wobei das Verbindungssystem mindestens ein erstes Fügeelement, das ein Rastgehäuse (220) umfasst, und ein zweites Fügeelement umfasst, das eine Klappe (300) umfasst, wobei das Verfahren zum Montieren einer Verbindung einen Schritt des Verrastens eines männlichen Teils (100) eines ersten Anschlusses durch Translation in einem weiblichen Teil (200) eines zweiten Anschlusses, und mindestens einen Schritt des Verriegelns umfasst, der eine Translation zwischen dem männlichen (100) und weiblichen Teil (200) verhindert, **dadurch gekennzeichnet, dass** es einen Schritt der Translation des Rastgehäuses (220), einen Schritt des Drehens der Klappe (300), und einen Schritt des Sperrens in der Verriegelungsstellung umfasst, der automatisch erfolgt, um die Verriegelungsstellung unumkehrbar zu machen.

## Claims

1. System for connecting a first and a second connector of two air-conditioning units, each of the first and second connectors comprising two pipes, the connection system comprising a male portion (100) of a first connector being triggered by translation into a female portion (200) of a second connector and at least one first and one second linking element, said first linking element and second linking element are configured to have an unlocked position and an locking position, said locking position is configured to prevent the translation between the male (100) and female (200) portions, **characterised in that**:
- the first linking element comprises a triggering casing (220) mobile in translation;
- the second linking element comprises a shutter (300) mobile in rotation;
and wherein the at least one of said first linking element and second linking element comprises at least one blocking element (400) configured to make the locking position of the first linking element and/or the second linking element irreversible.

2. System according to the preceding claim, wherein the at least one blocking element comprises a mobile ratchet element along one single direction of rotation or translation.

3. System according to any one of the preceding claims, wherein the at least one blocking element comprises a system comprising at least one bolt (401) carried by one from among the male portion (100), the female portion (200), the triggering casing (220) or the shutter (300) engaging with at least one latch (402) carried by the other from among the male portion (100), the female portion (200), the triggering casing (220) or the shutter (300).

4. System according to the preceding claim, wherein, a return element (403) is configured to engage and maintain in position the at least one bolt (401) in the at least one latch (402).

5. System according to the preceding claim, wherein the triggering casing (220) or the female portion (200) carries the at least one latch (402) in the form of a recess on an inner wall, said at least one latch (402) being opposite the at least one bolt (401) forming a nipple carried by the end portion (110) of the male portion (100) when the end portion (110) of the male portion (100) is in the final position for receiving inside the triggering casing (220), said end portion (110) of the male portion (100) housing a return element (403) pushing said at least one bolt (401) into said at least one latch (402) then maintaining it in said at least one latch (402) in the final receiving position.

6. System according to the preceding claim, the triggering casing (220) or the female portion (200) carrying at least two opposite latches (402) on a transversal axis, the end portion (110) of the male portion (100) carrying two bolts (401) opposite a respective latch (402), the return element (403) being inserted between the two bolts (401) in a transversal passage (116) to the end portion (110) of the male portion (100), the passage (116) having ends opening at the periphery of the end portion (110) by being opposite and each having a respective bolt (401).

7. System according to claim 4, wherein one from among the triggering casing (220) or the female portion (200) carries the at least one latch (402) in the form of a recess on an inner wall, said at least one latch (402) being opposite at least one bolt (401) forming a nipple carried by the other from among the female portion (200) or the triggering casing (220) and wherein when the end portion (110) of the male portion (100) is in the final receiving position inside the triggering casing (220), the triggering casing (220) or the female portion (200) housing a return element (403) is configured to push said at least one bolt (401) into said at least one latch (402), then maintaining it in said at least one latch (402) in the final receiving position.

8. System according to the preceding claim, wherein one from among the female portion (200) or the triggering casing (220) is configured to carry at least two opposite latches (402) on a transversal axis, the other from among the triggering casing (220) or the female portion (200) is configured to carry two bolts (401) opposite said two respective latches (402) and a transversal passage (223, 214), and wherein the return element (403) being inserted between the two bolts (401) in the transversal passage (223, 214) of said triggering casing (220) or said female portion (200), said passage (223, 214) having ends opening at the periphery of the triggering casing (220) or of the female portion (200) by being opposite and by each having a respective bolt (401).

9. System according to any one of the preceding claims, wherein one from among the male portion (100) or the female portion (200) and preferably the female portion (200) carries a shutter (300), said shutter (300) comprises an end mounted pivoting about a pivoting axis (301) parallel to an axis of width of one of the carrying male (100) or female (200) portions and to an end of this more remote portion of the other of the female (200) or male (100) portions not carrying any shutter (300), the shutter (300) being pivoting between an opening position for which a free end of the shutter (300) opposite the end mounted pivoting is maintained at a distance from the other female (200) or male (100) portion not carrying the shutter (300) and a closing position, wherein the shutter (300) is folded against the female (200) or male (100) portion.

10. System according to the preceding claim, wherein the shutter (300) carries at the free end thereof, at least one latch (402) in the form of a recess, said at least one latch (402) engaging with at least one bolt (401) carried by the other from among the female portion (200) or the male portion (100) not carrying the shutter (300), this other female (200) or male (100) portion housing a return element (403) pushing said at least one bolt (401) into said at least one latch (402) then maintaining it in said at least one latch (402) in the closed position of the shutter (300).

11. System according to the preceding claim, wherein the other female (200) or male (100) portion not carrying the shutter (300) has a housing for inserting (117) a curved pad (304) carried towards the free end of the shutter (300), said curved pad (304) carrying said at least one latch (402).

12. System according to the preceding claim, wherein the curved pad (304) has a bent free end (305) by being slightly inclined towards the pivoting mounted end of the shutter (300) so as to progressively push back said at least one bolt (401) outside of the insertion housing (117) by opposing the action of the return element (403) before introducing said at least one bolt (401) in said at least one latch (402).

13. System according to any one of claims 5 to 8 and 10 to 12, wherein the or each bolt (401) has a base on which the return element (403) and a rounded pin are born, having a free end penetrating into said at least one latch (402).

14. System according to any one of the preceding claims, wherein the male portion (100) carries at least one groove (113) and the female portion (200) carries at least one rolling element (212), said at least one rolling element (212) penetrating into said at least one groove (113) of the male portion (100) in the mounted position of the male portion (100) in the female portion (200), the triggering casing (220) having at least one clearing space (222) to receive said at least one rolling element (212) while said at least one rolling element (212) is not in said at least one groove (113) of the male portion (100), the triggering casing (220) being returned towards the male portion (100) under the action of at least one counter spring (213) integrated in the female portion (200) or of the shutter (300) in the closing position, when said at least one rolling element (212) is in said at least one groove (113) of the male portion (100), the shutter (300), in the closing position thereof, comprising at least one lug (302) blocking in translation the triggering casing (220) by extending the male portion (100).

15. Method for mounting the connection of a first and of a second connector or two air-conditioning units, each of the first and second connectors comprising two pipes for a connection system according to any one of the preceding claims, the connection system comprising at least one first linking element comprising a triggering casing (220) and a second linking element comprising a shutter (300), said method for mounting the connection comprising a step of triggering by translation of a male portion (100) of a first connector in a female portion (200) of a second connector and at least one locking step, preventing a translation between the male (100) and female (200) portions, **characterised in that** it comprises a step of translating the triggering casing (220), a step of rotating the shutter (300), and a step of blocking in the locking position, which is carried out automatically to make the locking position irreversible.
